# EUROPEAN PATENT SPECIFICATION

(11) **EP 2 326 861 B1**
(45) Date of publication and mention of the grant of the patent: **13.03.2013**
(21) Application number: 09781250.7
(22) Date of filing: 29.07.2009
(51) Int. Cl.: F16K 17/196

(54) **VALVE ASSEMBLY**
VENTILANORDNUNG
ENSEMBLE SOUPAPE

(30) Priority: 29.07.2008 GB 0813836; 16.02.2009 GB 0902531
(43) Date of publication of application: 01.06.2011
(73) Proprietor: OPW Fluid Transfer Group Europe B.V., 2153 GC, Niew Vennep (NL)
(72) Inventor: DE BOER, Jan, Cornelis, NL-1432 LT Aalsmeer (NL); SMIT, Edwin, Hendrikus, Cornelis, NL-2134 ZG Hoofddorp (NL)
(74) Representative: Harrison Goddard Foote
(86) International application number: PCT/EP2009/059822
(87) International publication number: WO 2010/012782

(56) References cited:
- WO-A-2005/106301
- FR-A- 2 253 174
- FR-A- 2 577 903
- GB-A- 2 405 684
- US-A1- 2003 150 492
- US-B1- 6 196 258

## Description

The present invention relates to valve assemblies. In particular but not exclusively the invention relates to a valve assembly for a liquid storage tank. More particularly but not exclusively the invention relates to a pressure-vacuum vent valve assembly for a liquid storage tank of a road tanker.

### BACKGROUND

Pressure vent valves and vacuum vent valves are important components of certain types of liquid storage tanks including liquid fuel storage tanks. If a pressure of a liquid in a liquid storage tank exceeds a critical value relative to atmospheric pressure a pressure vent valve is arranged to allow venting of vapour from within the storage tank whereby the pressure within the storage tank is reduced. Such a situation might arise as liquid is heated within the storage tank, for example upon exposure of the storage tank to sunlight.

Similarly, if a pressure of liquid in a liquid storage tank falls below a critical value relative to atmospheric pressure, a vacuum vent valve is arranged to allow air or other gas to enter the storage tank. Such a situation might arise as hot liquid cools within a liquid storage tank.

In conventional liquid storage tanks requiring the presence of both a pressure vent valve and a vacuum vent valve, either separate pressure and vacuum vent valves are provided at respective different locations of the storage tank, or a single valve is provided that performs both a pressure outlet function and a vacuum inlet function. Thus, a pressure-vacuum valve functionality is provided whereby the valve is operable to allow gas within the storage tank to escape when a pressure within the storage tank exceeds a critical release pressure, and a vacuum relief functionality in which the valve is operable to allow gas into the storage tank when the pressure within the storage tank falls below a critical intake pressure.

However, difficulty is encountered in designing a valve to provide both gas venting and gas intake operations because the pressure differences between the internal volume of the storage tank and the external volume are very different in magnitude in .each case. Consequently, resilient elements operable to bias a closure element of the valve to a closed condition and to allow opening when pressure in the storage tank is too high or too low must have correspondingly different spring constants.

CN2908950 discloses a vacuum pressure valve for installation on a venthole on the top of a solar water heater. The valve allows exhausting of pressure and vacuum generated in the water heater and prevents collapsing or breaking of the water heater. The device comprises a valve body with a negative pressure valve core and a positive pressure valve core set in the valve body.

A valve assembly of this type is known from the document FR 2253174.

### STATEMENT OF THE INVENTION

In a first aspect of the invention there is provided a valve assembly coupled to a liquid storage tank, the storage tank having a wall, the assembly comprising:
a pressure relief conduit;
a gas inlet valve device having a gas inlet aperture through which gas may pass into the tank; and
a gas outlet valve device having a gas outlet aperture through which gas may pass out from the tank,
the inlet valve device and outlet valve device being arranged to control a flow of gas into and out from the storage tank, respectively, whereby a pressure of gas in the tank may be maintained between an upper pressure value being a value in excess of a reference pressure value by a prescribed amount and a lower pressure value being a value below the reference pressure value by a prescribed amount, the gas inlet and outlet apertures being provided in gaseous communication with the pressure relief conduit, the pressure relief conduit being arranged such that gas flowing into or out from the storage tank by means of an operation of the valve assembly is caused to pass through the conduit,
the tank further having a liquid inlet, the liquid inlet being switchable between a sealed condition in which liquid may not be fed into the tank through the liquid inlet and an open condition in which liquid may be fed into the tank through the liquid inlet,
wherein the inlet valve device and the outlet valve device each comprise a valve member arranged whereby movement of the valve member between first and second positions results in switching of the inlet valve device and the outlet valve device between closed and open conditions, respectively, the assembly being arranged to be coupled to the tank so as to assume a first orientation in normal use with the tank in the sealed condition, characterised in that in the first orientation, movement of the valve member of the inlet valve device between the open and closed conditions is arranged to involve movement of the valve member in a horizontal plane, and in the first orientation, movement of the valve member of the outlet valve device between the open and closed conditions is arranged to involve movement of the valve member of the outlet valve device in a vertical plane.

Embodiments of the invention have the advantage that improved reliability and performance is obtained relative to a combined pressure-vent valve since separate valves are responsible for gas intake and gas venting operations. At the same time, a reduction of a footprint of the valves at a wall of the storage tank or other structure to which the assembly is attached may be facilitated relative to a footprint in the case that the valves are connected directly to the wall of the storage tank.

By footprint is meant a size of a surface area of the wall that is required in order to install the valves to the wall.

Embodiments of the invention have the further advantage that a risk that the at least one inlet valve device will inadvertently open due to upward and/or downward movement of the valve assembly due for example to movement of a road tanker along a road surface is reduced.

Known vacuum pressure valves are not suitable for coupling to a wall of a liquid storage tank in the configuration whereby in the first orientation movement of the valve member of the inlet valve device between the open and closed conditions is arranged to involve movement of the valve member in a substantially non-vertical plane.

Preferably the valve member of the inlet valve device has a face portion, the device further comprising a seat portion provided around the inlet aperture of the inlet valve device, wherein in the first position of the valve member the face portion forms a gas tight seal with the seat portion thereby to block a flow of gas through the inlet aperture and in the second position the face portion does not form a gas tight seal with the seat member thereby to allow a flow of gas through the inlet aperture.

Preferably the outlet valve device has a face portion, the device further comprising a seat portion provided around the outlet aperture of the outlet valve device, the valve member being movable between a first position in which the face portion forms a gas tight seal with the seat portion thereby to block a flow of gas through the outlet aperture and a second position in which the face portion does not form a gas tight seal with the seat portion thereby to allow a flow of gas through the outlet aperture.

The face portions of the valve members of the inlet valve device and the outlet valve device may be oriented in respective different planes.

Said respective different planes may be substantially normal to one another.

Preferably the gas outlet aperture is arranged to be substantially coaxial with the pressure relief conduit.

The reference pressure value may correspond to an ambient atmospheric pressure.

The valve assembly may be coupled to the wall of the storage tank such that the inlet and outlet valve devices are provided on one side of the wall of the storage tank.

The inlet and outlet valve devices are preferably provided on an interior side of the wall of the storage tank.

The valve assembly may be coupled to the wall of the storage tank such that the pressure relief conduit passes substantially through the wall of the storage tank.

Preferably the pressure relief conduit comprises a coupling member arranged to couple the assembly to the wall of the storage tank.

The assembly may comprise a plurality of inlet valve devices and a single outlet valve device.

Preferably the assembly is releasably coupled to the cover of the manlid assembly.

Preferably the assembly is coupled to the cover such that with the manlid assembly in the sealed condition the assembly is provided on an inside of the liquid storage tank.

The inlet valve bias member is preferably arranged to be provided on a side of the valve member upstream of the gas inlet aperture when the assembly is provided on an inside of the liquid storage tank.

Preferably the assembly is arranged whereby the outlet valve bias member is provided on a side of the outlet valve member downstream of the gas outlet aperture.

In a second aspect of the invention there is provided a road tanker comprising an assembly according to the first aspect of the invention.

In a third aspect of the invention there is provided a liquid fuel road tanker comprising an assembly according to the first aspect of the invention.

The assembly is preferably arranged to be oriented in use whereby movement of the valve assembly in a substantially vertical direction does not increase a risk that the inlet valve device will assume the open condition due to inertia of the valve member when the pressure within the structure is not below the lower pressure value.

This has the advantage of reducing a risk that the at least one inlet valve device will inadvertently open due to upward and/or downward movement of the valve assembly due for example to movement of a road tanker along a road surface.

In some embodiments this has the further advantage that a valve member having an increased area relative to known inlet valve devices may be provided. This is because in some embodiments the cross-sectional area of an aperture closed by the valve member may be made larger than the footprint of the valve assembly with respect to a surface to which the valve assembly is mounted.

Alternatively or in addition the assembly may be arranged to be oriented in use whereby movement of the valve assembly in a substantially vertical direction does not increase a risk that the outlet valve device will assume the open condition due to inertia of a valve member of the outlet valve device when the pressure within the structure is not above the upper pressure value.

### BRIEF DESCRIPTION OF THE DRAWINGS

For a better understanding of the present invention, and to show how it may be carried into effect, reference will now be made by way of example to the accompanying drawings, in which:
FIGURE 1 is a cut-away schematic diagram of a valve assembly according to an embodiment of the invention;
FIGURE 2 is an enlarged cut-away schematic diagram of a portion of a valve assembly according to the embodiment of FIG. 1;
FIGURE 3 is an exploded view of a valve assembly according to the embodiment of FIG. 1; and
FIGURE 4 shows a valve assembly according to an embodiment of the invention coupled to a cover of a manlid.

### DETAILED DESCRIPTION

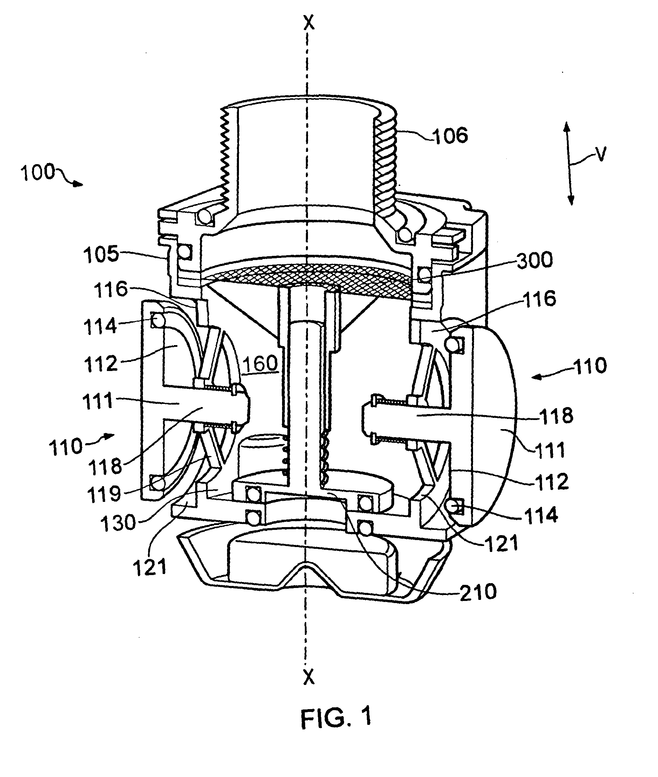

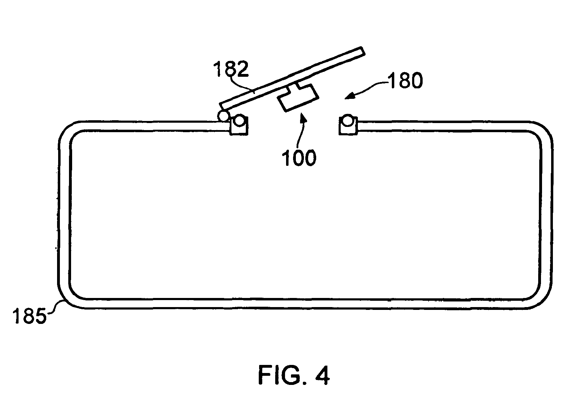

FIG. 1 shows a valve assembly 100 according to an embodiment of the invention. The valve assembly 100 has a body portion 105 and a connector portion 106 arranged to couple the body portion 105 to a liquid storage tank. In some embodiments the valve assembly 100 is arranged to be coupled to a cover 182 of a manlid assembly 180 fitted to a storage tank 185 as shown in FIG. 4.

The valve assembly 100 has a pair of inlet valve devices 110 in the form of poppet valve devices provided on generally opposite sides of the body portion 105. The inlet valve devices 110 each have a valve member 111 having a face portion 112 having a seal element 114 provided around a periphery thereof. The seal element 114 is arranged to abut a seat portion 116 of the inlet valve device 110 thereby to form a fluid tight seal between the valve member 111 and the seat portion 116 thereby closing a fluid inlet aperture 121 provided in the body portion 105.

A stem 118 of the inlet valve device is provided with a coil spring 119 therearound, the coil spring 119 being arranged to bias the stem 118 to a position in which the seal element 114 is in abutment with the seat portion 116. With the seal element 114 in abutment with the seat portion 116 fluid is unable to flow through the inlet aperture 121.

When a pressure in the storage tank falls to a value such that a pressure drop across the valve member 111 exceeds a critical intake pressure value relative to ambient pressure the valve member 111 is arranged to be displaced such that a fluid flowpath is provided through the aperture 121.

The presence of two inlet valve devices 110 allows an increase in a flow rate of fluid into the storage tank when the fluid flowpath is provided through the aperture 121.

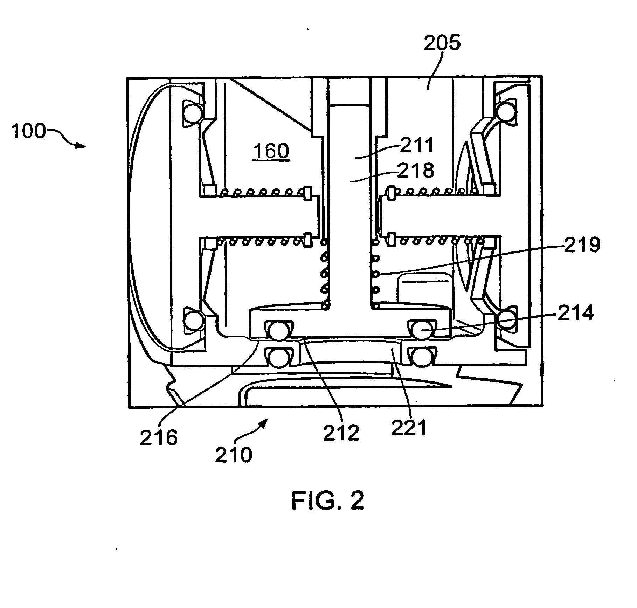

The valve assembly 100 is also provided with a pressure outlet valve device 210 (FIG. 2) having a valve member 211 having a face portion 212 having a seal element 214 provided around a periphery thereof. The seal element 214 is arranged to abut a seat portion 216 of the inlet valve device 210 thereby to form a fluid tight seal between the valve member 211 and the seat potion 216 thereby closing a fluid outlet aperture 221 provided in the body portion 105.

As in the case of the inlet valve device 110, the outlet valve device 210 is provided with a coil spring 219 therearound, the coil spring 219 being arranged to bias a stem 218 of the valve member 211 to a position in which the seal element 214 is in abutment with the seat portion 216. With the seal element 214 in abutment with the seat portion 216 fluid is unable to flow through the outlet aperture 221.

When a pressure in the storage tank rises above a critical value such that a pressure within the storage tank exceeds a critical vent pressure value relative to ambient pressure, the valve member 211 is arranged to be displaced such that a fluid flow path is provided through the aperture 221 whereby fluid may be vented from the storage tank.

The connector portion 106 of the housing portion 105 (FIG. 1) provides a fluid conduit through which fluid may be drawn into or vented from a storage tank or other structure to which the valve assembly 100 is connected.

The connector portion 106 has a connector portion longitudinal axis (line X-X), the inlet valve devices 110 being arranged about the longitudinal axis such that axial movement of the valve members 111 occurs in a plane normal to the line X-X. In use, the valve assembly is mounted to the fluid storage tank or other structure such that the connector portion longitudinal axis is provided in a substantially vertically upright orientation. Consequently, abrupt vertical movement of the valve assembly 100 (as indicated by arrow V) is less likely to result in inadvertent movement of a valve member 111 to open or close the aperture 121. This is in contrast to prior art devices in which movement of the valve member of an inlet valve is typically arranged to occur in a generally vertical direction.

The present design has the further advantage that the inlet aperture 121 may be made relatively large without increasing a size of the footprint of the valve assembly 100 at the location of the storage tank or other structure at which the valve assembly 100 is coupled to the storage tank or other structure. This is at least in part because the inlet and outlet valve devices are coupled to a wall of the storage tank by means of the conduit provided by the connector portion 106. A footprint of the connector portion at the wall of the storage tank may be made much smaller than a size of a corresponding combined footprint of the inlet and outlet devices 110, 210 if the devices were each coupled individually to the wall of the storage tank.

By 'footprint' is meant a minimum size of a surface area of the storage tank or other structure required for installation of the valve assembly thereto.

The presence of two vacuum inlet devices has the advantage that an increased flow rate of fluid through the inlet aperture 121 may be achieved allowing relatively rapid relief of a vacuum condition established in the storage tank or other structure to which the valve assembly 100 is coupled.

Furthermore, embodiments of the invention have the advantage that inadvertent opening of an inlet valve device due to abrupt vertical movement of the valve assembly 100 is reduced. This is at least in part because the valve member of the inlet valve device is arranged such that in use movement of the valve member between open and closed conditions takes place in a generally horizontal plane. Consequently, abrupt movement of the valve assembly 100 such as may occur during haulage of a liquid storage tank to which a valve assembly 100 is coupled results in forces that act in a direction substantially normal to that of movement of the valve member. Thus, substantially no effect on valve operation is caused by vertical movement of the valve assembly.

In the embodiment of FIG. 1 it can be seen that a cavity 160 is provided in a region between the inlet valve devices 110 and between the inlet valve devices 110 and the connector portion 106. A flame arrestor/filter member 300 is provided in this region. Flame arrestor/filter members typically introduce a substantial flow restriction. However, in some embodiments such as that of FIG. 1 the arrangement of the valve devices 110, 210 and connector portion 106 is such that a relatively large flame arrestor/filter member 300 may be provided thereby reducing an extent to which the flame arrestor/filter member restricts a flow of fluid through the assembly 100.

In some embodiments such as those shown in the illustrations the coil springs 119, 219 are arranged to be provided on an opposite side of the corresponding fluid inlet and outlet apertures 121, 221 to the liquid stored in the tank. Thus, coil spring 119 is provided upstream of a flow of fluid into the tank through the inlet aperture 121 and coil spring 219 is provided downstream of a flow of fluid out from the tank through the outlet aperture 221.

This feature has the advantage that coil springs 219 of the pressure outlet valve device 210 are not exposed to liquid or vapours of the tank except when a flow of fluid (such as liquid vapours or liquid itself) occurs through the outlet aperture 221. Similarly, coil springs 119 of the pressure outlet valve device 110 are not exposed to liquid or vapours of the tank except, in some embodiments, when a flow of fluid (such as liquid vapours or liquid itself) occurs through the outlet aperture 221.

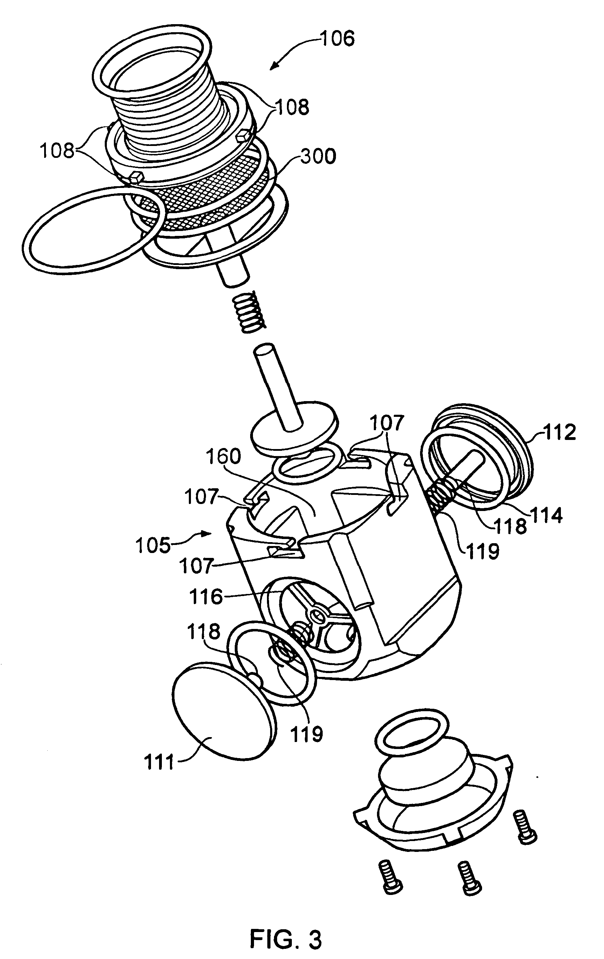

In the embodiment of FIG. 3 the body portion 105 is arranged to be releasably connectable to the connector portion 106. This feature allows removal of the body portion 105 for maintenance such as cleaning or replacement. A variety of couplings are useful for connecting the body portion 105 to the connector portion 106, such as a bayonet-type coupling, a screw-type coupling or any other suitable coupling. Quick-release type couplings such as the bayonet-type coupling are particularly useful.

In the embodiment shown in the figures the body portion is arranged to couple to the connector portion 106 by means of a bayonet-type coupling. Accordingly the body portion is provided with pin-receiving tracks 107 each arranged to receive a corresponding pin 108 protruding from the connector portion 106.

Throughout the description and claims of this specification, the words "comprise" and "contain" and variations of the words, for example "comprising" and "comprises", means "including but not limited to".

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A valve assembly (100) to be coupled to a liquid storage tank (185), the storage tank (185) having a wall, the assembly comprising:
a pressure relief conduit;
a gas inlet valve device (110) having a gas inlet aperture (121) through which gas may pass into the tank; and
a gas outlet valve device (210) having a gas outlet aperture (221) through which gas may pass out from the tank,
the inlet valve device (110) and outlet valve device (210) being arranged to control a flow of gas into and out from the storage tank (185), respectively, whereby a pressure of gas in the tank (185) may be maintained between an upper pressure value being a value in excess of a reference pressure value by a prescribed amount and a lower pressure value being a value below the reference pressure value by a prescribed amount, the gas inlet and outlet apertures (121, 122) being provided in gaseous communication with the pressure relief conduit, the pressure relief conduit being arranged such that gas flowing into or out from the storage tank (185) by means of an operation of the valve assembly (100) is caused to pass through the conduit,
the tank (185) further having a liquid inlet, the liquid inlet being switchable between a sealed condition in which liquid may not be fed into the tank (185) through the liquid inlet and an open condition in which liquid may be fed into the tank (185) through the liquid inlet,
wherein the inlet valve device (110) and the outlet valve device (210) each comprise a valve member (111, 211) arranged whereby movement of the valve member (111, 211) between first and second positions results in switching of the inlet valve device (110) and the outlet valve device (210) between closed and open conditions, respectively, the assembly (100) being arranged to be coupled to the tank (185) so as to assume a first orientation in normal use with the tank (185) in the sealed condition, **characterised in that**
in the first orientation, movement of the valve member (111) of the inlet valve device (110) between the open and closed conditions is arranged to involve movement of the valve member (111) in a horizontal plane, and, in the first orientation, movement of the valve member (211) of the outlet valve device (210) between the open and closed conditions is arranged to involve movement of the valve member (211) of the outlet valve device (210) in a vertical plane.

2. An assembly (100) as claimed in claim 1 wherein each valve member (111, 211) of the inlet and outlet valve devices has a face portion (112, 212), the devices further comprising a seat portion (116, 216) provided around the inlet aperture (121) of the inlet valve device (110) and the outlet aperture (221) of the outlet valve device (210), wherein in the first position of each valve member (111, 211) the face portion (112, 212) forms a gas tight seal with the seat portion (116, 216) thereby to block a flow of gas through the inlet aperture (121) and the outlet aperture (221) and in the second position the face portion (112, 212) does not form a gas tight seal with the seat member (116, 216) thereby to allow a flow of gas through the inlet aperture (121) of the inlet valve device (110) and the outlet aperture (221) of the outlet valve device (210).

3. An assembly (100) as claimed in claim 2 wherein the face portions (112, 212) of the valve members (111, 211) of the inlet valve device (110) and the outlet valve device (210) are oriented in respective different planes and preferably wherein said respective different planes are substantially normal to one another.

4. An assembly (100) as claimed in any preceding claim wherein the gas outlet aperture (221) is arranged to be substantially coaxial with the pressure relief conduit.

5. An assembly (100) as claimed in any preceding claim wherein the reference pressure value corresponds to an ambient atmospheric pressure.

6. An assembly (100) as claimed in any preceding claim wherein the valve assembly (100) is coupled to the wall of the storage tank (185) such that the inlet and outlet valve devices (110, 210) are provided on one side of the wall of the storage tank (185) and preferably wherein the inlet and outlet valve devices (110, 210) are provided on an interior side of the wall of the storage tank (185).

7. An assembly (100) as claimed in any preceding claim wherein the valve assembly (100) is coupled to the wall of the storage tank (185) such that the pressure relief conduit passes substantially through the wall of the storage tank (185) and/or wherein the pressure relief conduit comprises a coupling member arranged to couple the assembly to the wall of the storage tank (185).

8. An assembly (100) as claimed in any preceding claim comprising a plurality of inlet valve devices and a single outlet valve device or an assembly (100) as claimed in any preceding claim comprising a plurality of inlet valve devices and a plurality of outlet valve devices and/or wherein the number of inlet valve devices is greater than the number of outlet valve devices.

9. An assembly (100) as claimed in any preceding claim further comprising a filter member (300) preferably wherein the filter member (300) also provides a flame arrestor member and/or wherein the filter member (300) is provided in a cavity provided between the pressure relief conduit and the inlet and outlet apertures (121, 221).

10. An assembly (100) as claimed in any preceding claim wherein the pressure relief conduit is arranged to support the inlet and outlet valve devices (110, 210) in a spaced apart relationship with the wall of the storage tank (185).

11. An assembly (100) as claimed in any preceding claim arranged to be releasably coupled to the storage tank (185) preferably by means of a quick release coupling and/or by means of at least one selected from amongst a bayonet-type coupling and a screw-type coupling.

12. An assembly (100) as claimed in any preceding claim wherein the inlet valve device and outlet valve device (110, 210) are each provided with a valve device bias member arranged to bias the respective valve device to the closed condition and preferably wherein the respective valve bias members each comprise a resilient member.

13. An assembly (100) as claimed in any preceding claim coupled to a cover (182) of a manlid assembly (180) of the liquid storage tank (185), the manlid assembly (180) providing the liquid inlet, the manlid assembly (180) being switchable between the sealed condition in which liquid may not be fed into the tank (185) through the manlid assembly (180) and the open condition in which liquid may be fed into the tank (185) through the manlid assembly (180) and/or wherein the assembly (100) is releasably coupled to the cover (182) of the manlid assembly (180) and/or wherein the assembly (100) is coupled to the cover (182) such that with the manlid assembly (180) in the sealed condition the assembly (180) is provided on an inside of the liquid storage tank (185).

14. An assembly (100) as claimed in claim 12 or claim 13 depending through claim 12 wherein the inlet valve bias member is arranged to be provided on a side of the valve member upstream of the gas inlet aperture (121) when the assembly is provided on an inside of the liquid storage tank (185) and/or whereby the outlet valve bias member is provided on a side of the outlet valve member downstream of the gas outlet aperture (221).

15. A road tanker comprising an assembly (100) as claimed in any preceding claim or a liquid fuel road tanker comprising an assembly (100) as claimed in any preceding claim

## Patentansprüche

1. Ventilbaugruppe (100) zum Koppeln mit einem Flüssigkeitsvorratstank (185), wobei der Vorratstank (185) eine Wand aufweist, wobei die Baugruppe Folgendes umfasst:
eine Druckentlastungsleitung;
eine Gaseinlassventilvorrichtung (110) mit einer Gaseinlassöffnung (121), durch die Gas in den Tank strömen kann; und
eine Gasauslassventilvorrichtung (210) mit einer Gasauslassöffnung (221), durch die Gas aus dem Tank strömen kann,
wobei die Einlassventilvorrichtung (110) und die Auslassventilvorrichtung (210) zum Regeln eines Stroms von Gas in den bzw. aus dem Vorratstank (185) ausgelegt sind, so dass ein Druck von Gas in dem Tank (185) zwischen einem oberen Druckwert, der um einen vorgeschriebenen Betrag über einem Referenzdruckwert liegt, und einem unteren Druckwert gehalten werden kann, der um einen vorgeschriebenen Betrag unter dem Referenzdruckwert liegt, wobei die Gasein- und - auslassöffnungen (121, 122) in Gasverbindung mit der Druckentlastungsleitung vorgesehen sind, wobei die Druckentlastungsleitung so angeordnet ist, dass bewirkt wird, dass in den und aus dem Vorratstank (185) fließendes Gas durch eine Betätigung der Ventilbaugruppe (100) durch die Leitung fließt,
wobei der Tank (185) ferner einen Flüssigkeitseinlass aufweist, wobei der Flüssigkeitseinlass zwischen einem geschlossenen Zustand, in dem keine Flüssigkeit durch den Flüssigkeitseinlass in den Tank (185) gespeist werden kann, und einem offenen Zustand umgeschaltet werden kann, in dem Flüssigkeit durch den Flüssigkeitseinlass in den Tank (185) gespeist werden kann,
wobei die Einlassventilvorrichtung (110) und die Auslassventilvorrichtung (210) jeweils ein Ventilelement (111,211) umfassen, das so ausgelegt ist, dass eine Bewegung des Ventilelements (111, 211) zwischen der ersten und der zweiten Position zu einem Umschalten der Einlassventilvorrichtung (110) und der Auslassventilvorrichtung (210) jeweils zwischen dem geschlossenen und dem offenen Zustand führt, wobei die Baugruppe (110) so ausgelegt ist, dass sie mit dem Tank (185) gekoppelt wird, um im abgedichteten Zustand eine erste Orientierung beim normalen Gebrauch mit dem Tank (185) einzunehmen,
**dadurch gekennzeichnet, dass**
in der ersten Orientierung eine Bewegung des Ventilelements (111) der Einlassventilvorrichtung (110) zwischen dem offenen und dem geschlossenen Zustand eine Bewegung des Ventilelements (111) in einer horizontalen Ebene beinhaltet und in der ersten Orientierung eine Bewegung des Ventilelements (211) der Auslassventilvorrichtung (210) zwischen dem offenen und dem geschlossenen Zustand eine Bewegung des Ventilelements (211) der Auslassventilvorrichtung (210) in einer vertikalen Ebene beinhaltet.

2. Baugruppe (100) nach Anspruch 1, wobei jedes Ventilelement (111,211) der Ein- und Auslassventilvorrichtungen einen Stirnseitenabschnitt (112, 212) aufweist, wobei die Vorrichtungen ferner einen Sitzabschnitt (116, 216) umfassen, der um die Einlassöffnung (121) der Einlassventilvorrichtung (110) und der Auslassöffnung (221) der Auslassventilvorrichtung (210) vorgesehen ist, wobei der Stirnseitenabschnitt (112, 212) in der ersten Position jedes Ventilelements (111, 211) eine gasundurchlässige Dichtung mit dem Sitzabschnitt (116, 216) bildet, um dadurch einen Fluss von Gas durch die Einlassöffnung (121) und die Auslassöffnung (221) zu verhindern, und der Stirnseitenabschnitt (112, 212) in der zweiten Position keine gasundurchlässige Dichtung mit dem Sitzelement (116, 216) bildet, um dadurch einen Fluss von Gas durch die Einlassöffnung (121) der Einlassventilvorrichtung (110) und der Auslassöffnung (221) der Auslassventilvorrichtung (210) zuzulassen.

3. Baugruppe (100) nach Anspruch 2, wobei die Stirnseitenabschnitte (112, 212) der Ventilelemente (111, 211) der Einlassventilvorrichtung (110) und der Auslassventilvorrichtung (210) in jeweiligen unterschiedlichen Ebenen orientiert sind und wobei die genannten jeweiligen unterschiedlichen Ebenen vorzugsweise im Wesentlichen normal zueinander sind.

4. Baugruppe (100) nach einem der vorherigen Ansprüche, wobei die Gasauslassöffnung (221) so ausgelegt ist, dass sie im Wesentlichen koaxial zur Druckentlastungsleitung ist.

5. Baugruppe (100) nach einem der vorherigen Ansprüche, wobei der Referenzdruckwert einem atmosphärischen Umgebungsdruck entspricht.

6. Baugruppe (100) nach einem der vorherigen Ansprüche, wobei die Ventilbaugruppe (100) so mit der Wand des Vorratstanks (185) gekoppelt ist, dass die Ein- und Auslassventilvorrichtungen (110, 210) auf einer Seite der Wand des Vorratstanks (185) vorgesehen sind, und wobei die Ein- und Auslassventilvorrichtungen (110, 210) vorzugsweise auf einer Innenseite der Wand des Vorratstanks (185) vorgesehen sind.

7. Baugruppe (100) nach einem der vorherigen Ansprüche, wobei die Ventilbaugruppe (100) so mit der Wand des Vorratstanks (185) gekoppelt ist, dass die Druckentlastungsleitung im Wesentlichen durch die Wand des Vorratstanks (185) verläuft und/oder wobei die Druckentlastungsleitung ein Kupplungselement umfasst, das zum Kuppeln der Baugruppe mit der Wand des Vorratstanks (185) ausgelegt ist.

8. Baugruppe (100) nach einem der vorherigen Ansprüche, die mehrere Einlassvorrichtungen und eine einzige Auslassvorrichtung umfasst, oder Baugruppe (100) nach einem der vorherigen Ansprüche, die mehrere Einlassventilvorrichtungen und mehrere Auslassventilvorrichtungen umfasst, und/oder wobei die Zahl der Einlassventilvorrichtungen größer ist als die Zahl der Auslassventilvorrichtungen.

9. Baugruppe (100) nach einem der vorherigen Ansprüche, die ferner ein Filterelement (300) umfasst, wobei das Filterelement (300) ferner vorzugsweise auch ein Flammensperrelement bereitstellt und/oder wobei das Filterelement (300) in einem Hohlraum vorgesehen ist, der sich zwischen der Druckentlastungsleitung und den Ein- und Auslassöffnungen (121, 221) befindet.

10. Baugruppe (100) nach einem der vorherigen Ansprüche, wobei die Druckentlastungsleitung so ausgelegt ist, dass sie die Ein- und Auslassventilvorrichtungen (110, 210) in einer beabstandeten Beziehung mit der Wand des Vorratstanks (185) trägt.

11. Baugruppe (100) nach einem der vorherigen Ansprüche, die für ein lösbares Kuppeln mit dem Vorratstank (185) vorzugsweise mittels einer Schnelllösekupplung und/oder mittels wenigstens eines Elements gekuppelt wird, das aus einer Bajonettkupplung und einer Schraubkupplung ausgewählt ist.

12. Baugruppe (100) nach einem der vorherigen Ansprüche, wobei die Einlassventilvorrichtung und die Auslassventilvorrichtung (110, 210) jeweils mit einem Ventilvorrichtungsvorspannelement versehen sind, das so ausgelegt ist, dass es die jeweilige Ventilvorrichtung in den geschlossenen Zustand vorspannt, und wobei die jeweiligen Ventilvorspannelemente vorzugsweise jeweils ein elastisches Element umfassen.

13. Baugruppe (100) nach einem der vorherigen Ansprüche, die mit einer Abdeckung (182) einer Zugangsöffnungsbaugruppe (180) des Flüssigkeitsvorratstanks (185) gekoppelt ist, wobei die Zugangsöffnungsbaugruppe (180) den Flüssigkeitseinlass bereitstellt, wobei die Zugangsöffnungsbaugruppe (180) zwischen dem abgedichteten Zustand, in dem keine Flüssigkeit durch die Zugangsöffnungsbaugruppe (180) in den Tank (185) gespeist werden kann, und dem offenen Zustand geschaltet werden kann, in dem Flüssigkeit durch die Zugangsöffnungsbaugruppe (180) in den Tank (185) gespeist werden kann, und/oder wobei die Baugruppe (100) lösbar mit der Abdeckung (182) der Zugangsöffnungsbaugruppe (180) gekoppelt ist, und/oder wobei die Baugruppe (100) so mit der Abdeckung (182) gekoppelt ist, dass die Baugruppe (180), wenn sich die Zugangsöffnungsbaugruppe (180) im abgedichteten Zustand befindet, auf einer Innenseite des Flüssigkeitsvorratstanks (185) vorgesehen ist.

14. Baugruppe (100) nach Anspruch 12 oder Anspruch 13 in Abhängigkeit von Anspruch 12, wobei das Einlassventilvorspannelement so ausgelegt ist, dass es auf einer Seite des Ventilelements stromaufwärts von der Gaseinlassöffnung (121) vorgesehen ist, wenn die Baugruppe auf einer Innenseite des Flüssigkeitsvorratstanks (185) vorgesehen ist und/oder wobei das Auslassventilvorspannelement auf einer Seite des Auslassventilelements stromabwärts von der Gasauslassöffnung (221) vorgesehen ist.

15. Tankwagen, der eine Baugruppe (100) nach einem der vorherigen Ansprüche umfasst, oder Tankwagen für flüssige Brennstoffe, der eine Baugruppe (100) nach einem der vorherigen Ansprüche umfasst.

## Revendications

1. Ensemble vanne (100) destiné à être accouplé à un réservoir de stockage de liquide (185), le réservoir de stockage (185) possédant une paroi, l'ensemble comprenant :
un conduit de détente de pression ;
un dispositif à vanne d'admission de gaz (110) avec une ouverture d'admission de gaz (121) à travers laquelle du gaz peut passer dans le réservoir ; et
un dispositif à vanne de décharge de gaz (210) avec une ouverture de décharge de gaz (221) à travers laquelle du gaz peut sortir du réservoir,
le dispositif à vanne d'admission (110) et le dispositif à vanne de décharge (210) étant agencés de façon à piloter respectivement un flux de gaz se rendant dans le réservoir de stockage (185), ou en sortant, ce qui permet par conséquent à une pression de gaz, présente dans le réservoir (185), d'être maintenue entre une valeur de pression Haute laquelle représente une valeur qui est supérieure d'une grandeur prescrite à une valeur de la pression de référence, et une valeur de pression Basse laquelle représente une valeur qui est inférieure d'une grandeur prescrite à la valeur de la pression de référence, les ouvertures d'admission et de décharge de gaz (121, 122) étant montées en communication gazeuse avec le conduit de détente de pression, le conduit de détente de pression étant agencé de telle sorte que le gaz se rendant dans le réservoir de stockage (185), ou en sortant, en vertu du fonctionnement de l'ensemble vanne (100), soit obligé de passer à travers le conduit,
le réservoir (185) possédant en outre un orifice d'admission de liquide, l'orifice d'admission de liquide pouvant être permuté entre un état étanche dans lequel le liquide ne peut pas être acheminé dans le réservoir (185) à travers l'orifice d'admission de liquide et un état ouvert dans lequel le liquide peut être acheminé dans le réservoir (185) à travers l'orifice d'admission de liquide,
cas dans lequel le dispositif à vanne d'admission (110) et le dispositif à vanne de décharge (210) comportent chacun un élément de vanne (111, 211), lesquels sont disposés suivant un agencement grâce auquel le mouvement de l'élément de vanne (111,211) entre une première position et une seconde position provoque la permutation du dispositif à vanne d'admission (110) et du dispositif à vanne de décharge (210) entre un état fermé et un état ouvert, respectivement, alors que l'ensemble (100) est agencé pour être accouplé au réservoir (185) de sorte à adopter une première orientation en utilisation normale lorsque le réservoir (185) se trouve dans l'état étanche, **caractérisé en ce que**
dans la première orientation, le mouvement de l'élément de vanne (111) du dispositif à vanne d'admission (110) entre l'état ouvert et l'état fermé est agencé de manière à faire intervenir le mouvement de l'élément de vanne (111) suivant un plan horizontal et, dans la première orientation, le mouvement de l'élément de vanne (211) du dispositif à vanne de décharge (210) entre l'état ouvert et l'état fermé est agencé de manière à faire intervenir le mouvement de l'élément de vanne (211) du dispositif à vanne de décharge (210) suivant un plan vertical.

2. Ensemble (100) selon la revendication 1, chaque élément de vanne (111, 211) du dispositif à vanne d'admission et du dispositif à vanne de décharge possédant une portion face (112, 212), les dispositifs comprenant en outre une portion siège (116, 216) montée autour de l'ouverture d'admission (121) du dispositif à vanne d'admission (110) et de l'ouverture de décharge (221) du dispositif à vanne de décharge (210), cas dans lequel dans la première position de chaque élément de vanne (111, 211), la portion face (112, 212) constitue un joint étanche au gaz avec la portion siège (116, 216), ce qui interdit par conséquent tout écoulement de gaz à travers l'ouverture d'admission (121) et l'ouverture de décharge (221), et dans la seconde position la portion face (112, 212) ne constitue pas un joint étanche au gaz avec l'élément siège (116, 216), ce qui autorise par conséquent un écoulement de gaz à travers l'ouverture d'admission (121) du dispositif à vanne d'admission (110) et l'ouverture de décharge (221) du dispositif à vanne de décharge (210).

3. Ensemble (100) selon la revendication 2, les portions face (112, 212) des éléments de vanne (111, 211) du dispositif à vanne d'admission (110) et du dispositif à vanne de décharge (210) étant orientées suivant des plans respectifs différents et, de préférence, lesdits plans respectifs différents étant sensiblement perpendiculaires l'un par rapport à l'autre.

4. Ensemble (100) selon l'une quelconque des revendications précédentes, l'ouverture de décharge de gaz (221) étant agencée pour être sensiblement coaxiale avec le conduit de détente de pression.

5. Ensemble (100) selon l'une quelconque des revendications précédentes, la valeur de la pression de référence correspondant à une pression atmosphérique ambiante.

6. Ensemble (100) selon l'une quelconque des revendications précédentes, l'ensemble vanne (100) étant accouplé à la paroi du réservoir de stockage (185) de sorte que le dispositif à vanne d'admission et le dispositif à vanne de décharge (110, 210) sont montés sur un côté de la paroi du réservoir de stockage (185) et, de préférence, le dispositif à vanne d'admission et le dispositif à vanne de décharge (110, 210) sont montés sur un côté interne de la paroi du réservoir de stockage (185).

7. Ensemble (100) selon l'une quelconque des revendications précédentes, l'ensemble vanne (100) étant accouplé à la paroi du réservoir de stockage (185) de sorte que le conduit de détente de pression passe sensiblement à travers la paroi du réservoir de stockage (185) et/ou le conduit de détente de pression comportant un élément de couplage agencé de manière à assurer l'accouplement de l'ensemble à la paroi du réservoir de stockage (185).

8. Ensemble (100) selon l'une quelconque des revendications précédentes, comprenant une pluralité de dispositifs à vanne d'admission et un seul dispositif à vanne de décharge ou un ensemble (100) selon l'une quelconque des revendications précédentes comprenant une pluralité de dispositifs à vanne d'admission et une pluralité de dispositifs à vanne de décharge, et/ou le nombre de dispositifs à vanne d'admission étant plus important que le nombre de dispositifs à vanne de décharge.

9. Ensemble (100) selon l'une quelconque des revendications précédentes, comprenant en outre un élément filtre (300), de préférence l'élément filtre (300) jouant également le rôle d'élément pare-flammes et/ou l'élément filtre (300) étant monté dans une cavité ménagée entre le conduit de détente de pression et les ouvertures d'admission et de décharge (121, 221).

10. Ensemble (100) selon l'une quelconque des revendications précédentes, le conduit de détente de pression étant agencé de façon à soutenir le dispositif à vanne d'admission et le dispositif à vanne de décharge (110, 210) suivant une relation d'espacement avec la paroi du réservoir de stockage (185).

11. Ensemble (100) selon l'une quelconque des revendications précédentes, agencé pour être accouplé de façon détachable au réservoir de stockage (185), de préférence au moyen d'un raccord à dégagement rapide et/ou au moyen d'au moins un raccord sélectionné parmi un raccord de type à baïonnette et un raccord de type à vis.

12. Ensemble (100) selon l'une quelconque des revendications précédentes, le dispositif à vanne d'admission et le dispositif à vanne de décharge (110, 210) étant chacun muni d'un élément de sollicitation de dispositif à vanne lequel est agencé pour solliciter le dispositif à vanne respectif pour l'amener vers l'état fermé et, de préférence, les éléments de sollicitation de vanne respectifs comprenant chacun un élément élastique.

13. Ensemble (100) selon l'une quelconque des revendications précédentes, accouplé à un capot (182) d'un ensemble trou d'homme (180) du réservoir de stockage de liquide (185), l'ensemble trou d'homme (180) procurant l'orifice d'admission de liquide, l'ensemble trou d'homme (180) pouvant être permuté entre l'état étanche dans lequel le liquide ne peut pas être acheminé dans le réservoir (185) à travers l'ensemble trou d'homme (180) et l'état ouvert dans lequel le liquide peut être acheminé dans le réservoir (185) à travers l'ensemble trou d'homme (180), et/ou l'ensemble (100) étant accouplé de façon détachable au capot (182) de l'ensemble trou d'homme (180), et/ou l'ensemble (100) étant accouplé au capot (182) de sorte que lorsque l'ensemble trou d'homme (180) est dans l'état étanche l'ensemble (180) est alors prévu sur une face interne du réservoir de stockage de liquide (185).

14. Ensemble (100) selon la revendication 12 ou la revendication 13, lorsqu'elle est dépendante de la revendication 12, l'élément de sollicitation de la vanne d'admission étant agencé de façon à être monté sur un côté de l'élément de vanne en amont de l'ouverture d'admission de gaz (121) dans les cas où l'ensemble est monté sur une face interne du réservoir de stockage de liquide (185) et/ou de ce fait l'élément de sollicitation de la vanne de décharge étant monté sur un côté de l'élément de vanne de décharge en aval de l'ouverture de décharge de gaz (221).

15. Camion-citerne comprenant un ensemble (100) selon l'une quelconque des revendications précédentes ou camion-citerne à combustible liquide comprenant un ensemble (100) selon l'une quelconque des revendications précédentes.
